# EUROPÄISCHE PATENTSCHRIFT

(11) **EP 3 446 187 B1**
(45) Veröffentlichungstag und Bekanntmachung des Hinweises auf die Patenterteilung: **03.06.2020**
(21) Anmeldenummer: 17715625.4
(22) Anmeldetag: 28.03.2017
(51) Int. Cl.: G05D 1/02, G05B 19/418

(54) **VERFAHREN ZUM BETREIBEN EINER FERTIGUNGSANLAGE UND FERTIGUNGSANLAGE**
METHOD FOR OPERATING A PRODUCTION PLANT AND PRODUCTION PLANT
PROCÉDÉ PERMETTANT DE FAIRE FONCTIONNER UNE INSTALLATION DE PRODUCTION ET INSTALLATION DE PRODUCTION

(30) Priorität: 22.04.2016 DE 102016004882
(43) Veröffentlichungstag der Anmeldung: 27.02.2019
(73) Patentinhaber: SEW-EURODRIVE GmbH & Co. KG, 76646 Bruchsal (DE)
(72) Erfinder: SODER, Johann, 76707 Hambrücken (DE)
(86) Internationale Anmeldenummer: PCT/EP2017/025066
(87) Internationale Veröffentlichungsnummer: WO 2017/182134

(56) Entgegenhaltungen:
- DE-A1-102013 008 065
- US-B1- 7 356 378
- US-B1- 7 620 470

## Beschreibung

Die Erfindung betrifft ein Verfahren zum Betreiben einer Fertigungsanlage und Fertigungsanlage.

Es ist allgemein bekannt, dass in einer Fertigungsanlage Komponenten mittels eines intralogistischen Transports bewegt werden, beispielsweise mittels Förderbändern.

**Aus der** DE 10 2013 008065 A1 **ist als nächstliegender Stand der Technik eine Anlage zur Herstellung von Produkten bekannt.**

Der Erfindung liegt daher die Aufgabe zugrunde, eine Fertigungsanlage flexibel zu betreiben.

Erfindungsgemäß wird die Aufgabe bei dem Verfahren nach den in Anspruch 1 und bei der Fertigungsanlage nach den in Anspruch 5 angegebenen Merkmalen gelöst.

Wichtige Merkmale der Erfindung bei dem Verfahren zum Betreiben einer Fertigungsanlage sind, dass die Fertigungsanlage eine übergeordnete Steuerung, Arbeitsstationen und Fahrzeuge aufweist,
wobei zumindest zwei Arbeitsstationen gleichartig ausgeführt sind, so dass zu einer ersten Arbeitsstation eine zweite gleichartige Arbeitsstation vorhanden ist,
wobei jedes der Fahrzeuge einen Rechner aufweist, welcher zur Datenübertragung mittels eines Kommunikationskanals mit der übergeordneten Steuerung verbunden ist,
wobei jedes der Fahrzeuge ein Positionserfassungssystem zur Erfassung der Position des jeweiligen Fahrzeugs aufweist,
wobei die übergeordnete Steuerung die einer jeweiligen Arbeitsstation zugeordnete, vom Fahrzeug zur Durchführung eines Herstellungsverfahrensschritts an dieser jeweiligen Arbeitsstation anzufahrende Position an die Rechner der Fahrzeuge übermittelt,
wobei die übergeordnete Steuerung dem jeweiligen Rechner der Fahrzeuge einen jeweiligen Auftrag übermittelt, welcher die Reihenfolge der zu erreichenden Arbeitsstationen umfasst,
wobei die Rechner der Fahrzeuge ihre jeweilige Fahrzeugposition an die übergeordnete Steuerung übermitteln,
wobei die übergeordnete Steuerung zeitlich wiederkehrend die jeweils aktuellen Fahrzeugpositionen an alle Rechner übermittelt, insbesondere als Broadcast-Telegramm,
wobei der jeweilige Rechner eines jeweiligen Fahrzeugs einen Fahrweg bestimmt, der möglichst kurz ist und abhängig ist von der Position der anderen Fahrzeuge, wobei zur Vermeidung von Stau oder zur Verkürzung der Fertigungszeit der Fahrweg derart bestimmt wird, dass der Fahrweg statt zu einer ersten Arbeitsstation zu der gleichartigen zweiten Arbeitsstation führt.

Von Vorteil ist dabei, dass bei Erweiterungen oder anderen Änderungen, beispielsweise beim Hinzufügen gleichartiger Arbeitsstationen zur Verbesserung der Produktivität der Fertigungsanlage, die Fahrzeug sich eigenständig einen angepassten Weg für den intralogistischen Transport suchen.

Im Vergleich zur Förderbandtechnik, welche bei Änderungen nachteiligerweise unflexibel ist, wird erfindungsgemäß der intralogistische Transport auch bei atmenden Fertigungsanlagen, also beispielsweise skalierten Anlagen, optimiert.

Wenn also beispielsweise zu den schon vorhandenen Arbeitsstationen gleichartige Arbeitsstationen der Fertigungsanlage hinzugefügt werden, bestimmt das Fahrzeug seinen Fahrweg in optimierter Weise. Die Ausnutzung der Arbeitsstationen wird also optimiert. Dadurch ist die Produktivität der Anlage erhöht.

Bei einer vorteilhaften Ausgestaltung ist der Kommunikationskanal durch steuerbare Lichtquellen und entsprechende lichtsensitive Sensoren bewirkt,
wobei am jeweiligen Fahrzeug jeweils zumindest eine steuerbare Lichtquelle und zumindest ein lichtsensitiver Sensor angeordnet ist,
wobei in der Fertigungsanlage jeweils zumindest eine steuerbare Lichtquelle und ein lichtsensitiver Sensor angeordnet ist. Von Vorteil ist dabei, dass die Beleuchtung der Fertigungsanlage verwendbar ist als steuerbare Lichtquelle. Denn als Beleuchtungsmittel sind beispielsweise Leuchtdioden wählbar, so dass durch entsprechende Ansteuerung derselben Informationen im entsprechend modulierten Licht des als steuerbare Lichtquelle fungierenden Beleuchtungsmittel übermittelbar sind. Die lichtsensitiven Sensoren der Fahrzeuge sind somit in der Lage ein entsprechendes Broadcast-Telegramm gleichzeitig zu empfangen. Die Datenübertragung ist aber auch bidirektional ausgebildet, da an jedem Fahrzeug eine steuerbare Lichtquelle angeordnet ist, so dass ausgesandtes und moduliertes Licht vom stationär in der Fertigungsanlage angeordneten lichtsensitiven Sensor detektierbar und an die übergeordnete Steuerung ein entsprechendes Sensorsignal weiterleitbar ist.

Bei einer vorteilhaften Ausgestaltung umfasst jede Arbeitsstation einen Rechner und ist mittels eines Kommunikationskanals zur Datenübertragung mit der übergeordneten Steuerung verbunden,
wobei der Status der Arbeitsstation über den Kommunikationskanal gemeldet wird an die übergeordnete Steuerung und von dieser an die Fahrzeuge, insbesondere mittels eines Broadcast-Telegramms. Von Vorteil ist dabei, dass der Status bei der Fahrwegplanung berücksichtigbar ist. Beispielsweise ist der Ausfall oder sonstiger Fehlerzustand einer Arbeitsstation berücksichtigbar, indem das Fahrzeug einen anderen Fahrweg bestimmt, der zu einer gleichartigen zweiten Arbeitsstation führt. Auch wenn beispielsweise eine Arbeitsstation meldet, dass soeben ein Herstellungsverfahrensschritt mit einer prognostizierten oder bekannten Zeitdauer begonnen wurde, ist ein neuer Fahrweg zu einer gleichartigen zweiten Arbeitsstation planbar, insbesondere wenn die für das Durchfahren benötigte Fahrzeit geringer ist als die Zeitdauer.

Bei einer vorteilhaften Ausgestaltung bestimmt der jeweilige Rechner eines jeweiligen Fahrzeugs den Fahrweg abhängig von dem Status der Arbeitsstation,
insbesondere bei Fehlerfunktion der ersten Arbeitsstation den Fahrweg umplant zur gleichartigen zweiten Arbeitsstation. Von Vorteil ist dabei, dass der Status bei der Fahrwegplanung berücksichtigbar ist.

Die Erfindung wird nun anhand von Abbildungen näher erläutert:

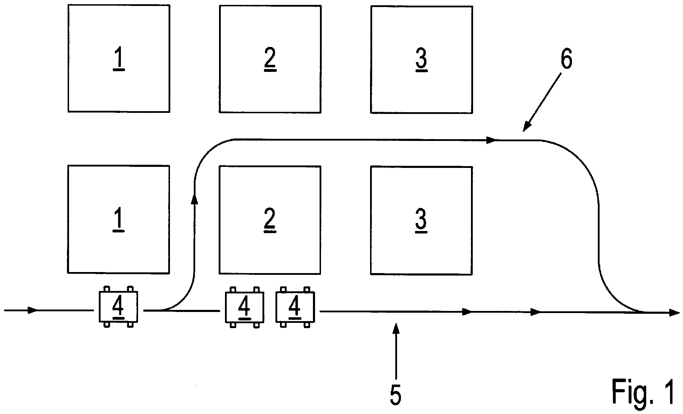

In der Figur 1 ist eine Fertigungsanlage schematisch skizziert.

Dabei sind eine erste Arbeitsstation 1, eine zweite Arbeitsstation 2 und eine dritte Arbeitsstation 3 hintereinander angereiht angeordnet.

Ein Fahrzeug 4 transportiert eine von den Arbeitsstationen (1, 2, 3) zu bearbeitende Komponente und fährt auf einem Fahrweg 5 der Reihe nach diese Arbeitsstationen (1, 2, 3) nacheinander an.

An jeder der Arbeitsstationen (1, 2, 3) wird ein jeweiliger Herstellungsverfahrensschritt ausgeführt, indem die Komponente entsprechend bearbeitet wird und/oder mit einem Teil, welches zuvor bei der jeweiligen Arbeitsstation (1, 2, 3) mit der Komponente verbunden wird.

Das Fahrzeug weist eine Steuerung auf, welche den Antrieb des Fahrzeugs steuert und mit einem Positionserfassungssystem verbunden ist.

Die Steuerung des Fahrzeugs 4 umfasst einen Rechner, der auch den Fahrweg bestimmt und als Soll-Fahrweg vorgibt. Das Fahrzeug wird dann entsprechend dem Soll-Fahrweg entlang gesteuert.

In der Fertigungsanlage sind auch weitere gleichartige Fahrzeuge 4 vorgesehen, die ebenfalls Komponenten transportieren und zur Durchführung eines jeweiligen Herstellungsverfahrensschrittes zu den entsprechenden Arbeitsstationen (1, 2, 3) transportieren.

Um eine zu große Auslastung zu vermeiden, wird die Fertigungsanlage skaliert, also gleichartige Arbeitsstationen (1, 2, 3) hinzugefügt.

Der Steuerung des Fahrzeugs 4 werden die Positionen und/oder die möglichen Fahrwege 6 zu den neu hinzugekommenen Arbeitsstationen (1, 2, 3) mitgeteilt.

Außerdem werden die jeweils aktuellen Positionen der anderen Fahrzeuge (1, 2, 3) über die übergeordnete Steuerung der Steuerung des Fahrzeugs mitgeteilt.

Die Steuerung bestimmt abhängig von den übermittelten Daten den optimalen Weg den kürzesten Weg, welcher die für Abarbeitung des Produktionsauftrags notwendigen Arbeitsstationen in der entsprechenden Reihenfolge abfährt. Wenn jedoch dieser Weg durch sich aufstauende Fahrzeuge 4 verhindert ist, wird ein anderer Fahrweg gewählt, der diesen Stau umgeht, indem die neu hinzugekommen Arbeitsstationen (1, 2, 3) bei der Fahrwegbestimmung berücksichtigt werden.

Somit ist die Effektivität der Anlage verbessert und die Produktionskapazität der Fertigungsanlage optimal ausgenutzt.

Die Erfindung beschreibt also ein Verfahren zum Betreiben einer Fertigungsanalge mit Arbeitsstationen und Fahrzeugen, wobei die Fahrzeuge die Fahrwege abhängig von den Positionen der anderen Fahrzeuge bestimmt werden, wobei der Fahrweg so gewählt wird, dass diejenige von je zwei gleichartigen Arbeitsstationen angefahren wird, welche eine geringere Auslastung aufweist oder vor welcher sich eine geringere Anzahl von Fahrzeugen, insbesondere in der Warteschlange, sich befinden.

### Bezugszeichenliste

1 erste Arbeitsstation
2 zweite Arbeitsstation
3 dritte Arbeitsstation
4 Fahrzeug
5 Fahrweg
6 geänderter Fahrweg

## Patentansprüche

1. Verfahren zum Betreiben einer Fertigungsanlage,
wobei die Fertigungsanlage eine übergeordnete Steuerung, Arbeitsstationen (1, 2, 3) und Fahrzeuge (4) aufweist,
wobei zumindest zwei Arbeitsstationen (1, 2, 3) gleichartig ausgeführt sind, so dass zu einer ersten Arbeitsstation (1) eine zweite gleichartige Arbeitsstation (2) vorhanden ist,
wobei jedes der Fahrzeuge (4) einen Rechner aufweist, welcher zur Datenübertragung mittels eines Kommunikationskanals mit der übergeordneten Steuerung verbunden ist,
wobei jedes der Fahrzeuge (4) ein Positionserfassungssystem zur Erfassung der Position des jeweiligen Fahrzeugs (4) aufweist,
**dadurch gekennzeichnet, dass**
die übergeordnete Steuerung die einer jeweiligen Arbeitsstation (2) (1, 2, 3) zugeordnete, vom Fahrzeug (4) zur Durchführung eines Herstellungsverfahrensschritts an dieser jeweiligen Arbeitsstation (1, 2, 3) anzufahrende Position an die Rechner der Fahrzeuge (4) übermittelt,
wobei die übergeordnete Steuerung dem jeweiligen Rechner der Fahrzeuge (4) einen jeweiligen Auftrag übermittelt, welcher die Reihenfolge der zu erreichenden Arbeitsstationen (1, 2, 3) umfasst,
wobei die Rechner der Fahrzeuge (4) ihre jeweilige Fahrzeugposition an die übergeordnete Steuerung übermitteln,
wobei die übergeordnete Steuerung zeitlich wiederkehrend die jeweils aktuellen Fahrzeugpositionen an alle Rechner übermittelt, insbesondere als Broadcast-Telegramm,
wobei der jeweilige Rechner eines jeweiligen Fahrzeugs (4) einen Fahrweg (5) bestimmt, der möglichst kurz ist und abhängig ist von der Position der anderen Fahrzeuge (4), wobei wenn jedoch dieser Fahrweg durch sich aufstauende Fahrzeuge (4) verhindert ist oder zur Verkürzung der Fertigungszeit, der Fahrweg (5) derart bestimmt wird, dass der Fahrweg (5) statt zu einer ersten Arbeitsstation (1) zu der gleichartigen zweiten Arbeitsstation (2) führt.

2. Verfahren nach Anspruch 1,
**dadurch gekennzeichnet, dass**
der Kommunikationskanal durch steuerbare Lichtquellen und entsprechende lichtsensitive Sensoren bewirkt ist,
wobei am jeweiligen Fahrzeug (4) jeweils zumindest eine steuerbare Lichtquelle und zumindest ein lichtsensitiver Sensor angeordnet ist,
wobei in der Fertigungsanlage jeweils zumindest eine steuerbare Lichtquelle und ein lichtsensitiver Sensor angeordnet ist.

3. Verfahren nach mindestens einem der vorangegangenen Ansprüche,
**dadurch gekennzeichnet, dass**
jede Arbeitsstation (1, 2, 3) einen Rechner umfasst und mittels eines Kommunikationskanals zur Datenübertragung mit der übergeordneten Steuerung verbunden ist,
wobei der Status der Arbeitsstation (1, 2, 3) über den Kommunikationskanal gemeldet wird an die übergeordnete Steuerung und von dieser an die Fahrzeuge (4), insbesondere mittels eines Broadcast-Telegramms.

4. Verfahren nach mindestens einem der vorangegangenen Ansprüche,
**dadurch gekennzeichnet, dass**
wobei der jeweilige Rechner eines jeweiligen Fahrzeugs (4) den Fahrweg (5) abhängig von dem Status der Arbeitsstation (1, 2, 3) bestimmt,
insbesondere bei Fehlerfunktion der ersten Arbeitsstation (1) den Fahrweg (5) umplant zur gleichartigen zweiten Arbeitsstation (2).

5. Fertigungsanlage zur Durchführung eines Verfahrens nach mindestens einem der vorangegangenen Ansprüche.

6. Fertigungsanlage nach Anspruch 5,
wobei die Fertigungsanlage eine übergeordnete Steuerung, Arbeitsstationen (1, 2, 3) und Fahrzeuge (4) aufweist,
wobei zumindest zwei Arbeitsstationen (1, 2, 3) gleichartig ausgeführt sind, so dass zu einer ersten Arbeitsstation (1) eine zweite gleichartige Arbeitsstation (2) vorhanden ist,
wobei jedes der Fahrzeuge (4) einen Rechner aufweist, welcher zur Datenübertragung mittels eines Kommunikationskanals mit der übergeordneten Steuerung verbunden ist,
wobei jedes der Fahrzeuge (4) ein Positionserfassungssystem zur Erfassung der Position des jeweiligen Fahrzeugs (4) aufweist,
**dadurch gekennzeichnet, dass**
jedes Fahrzeug (4) einen Rechner zur Bestimmung eines optimalen Fahrwegs (5) aufweist.

## Claims

1. Method for operating a production plant,
wherein the production plant comprises a higher-level controller, workstations (1, 2, 3) and vehicles (4),
wherein at least two workstations (1, 2, 3) are configured identically such that, for a first workstation (1), a second identical workstation (2) is present,
wherein each of the vehicles (4) has a computer which is connected to the higher-level controller by means of a communication channel for data transmission purposes,
wherein each of the vehicles (4) has a position detection system for detecting the position of the respective vehicle (4), **characterized in that**
the higher-level controller transmits to the computers of the vehicles (4) the position which is associated with a respective workstation (1, 2, 3) and which is to be approached by the vehicle (4) in order to carry out a production method step at said respective workstation (1, 2, 3),
wherein the higher-level controller transmits to the respective computer of the vehicles (4) a respective order which comprises the sequence of the workstations (1, 2, 3) to be reached, wherein the computers of the vehicles (4) transmit their respective vehicle position to the higher-level controller, wherein the higher-level controller transmits the respective current vehicle positions to all computers in a temporally recurring manner, in particular as a broadcast telegram,
wherein the respective computer of a respective vehicle (4) determines a route (5) which is as short as possible and which depends on the position of the other vehicles (4), wherein if, however, this route is blocked by an accumulation of vehicles (4) or in order to shorten the production time, the route (5) will be determined such that the route (5) leads to the identical second workstation (2) instead of to a first workstation (1).

2. Method according to claim 1,
**characterized in that**
the communication channel is brought about by controllable light sources and corresponding light-sensitive sensors,
wherein in each case at least one controllable light source and at least one light-sensitive sensor is arranged on the respective vehicle (4),
wherein in each case at least one controllable light source and one light-sensitive sensor is arranged in the production plant.

3. Method according to at least one of the preceding claims, **characterized in that**
each workstation (1, 2, 3) comprises a computer and is connected to the higher-level controller by means of a communication channel for data transmission purposes,
wherein the status of the workstation (1, 2, 3) is reported via the communication channel to the higher-level controller and from the latter to the vehicles (4), in particular by means of a broadcast telegram.

4. Method according to at least one of the preceding claims, **characterized in that**
the respective computer of a respective vehicle (4) determines the route (5) as a function of the status of the workstation (1, 2, 3),
in particular, in the event of a malfunction of the first workstation (1), replans the route (5) to the identical second workstation (2).

5. Production plant for carrying out a method according to at least one of the preceding claims.

6. Production plant according to claim 5,
wherein the production plant comprises a higher-level controller, workstations (1, 2, 3) and vehicles (4),
wherein at least two workstations (1, 2, 3) are configured identically such that, for a first workstation (1), a second identical workstation (2) is present,
wherein each of the vehicles (4) has a computer which is connected to the higher-level controller by means of a communication channel for data transmission purposes,
wherein each of the vehicles (4) has a position detection system for detecting the position of the respective vehicle (4), **characterized in that**
each vehicle (4) has a computer for determining an optimal route (5) .

## Revendications

1. Procédé pour l'exploitation d'une installation de production,
ladite installation de production étant équipée d'une commande prioritaire, de postes de travail (1, 2, 3) et de véhicules (4),
sachant qu'au moins deux postes de travail (1, 2, 3) présentent des réalisations de même type, d'où la présence d'un second poste de travail (2) de même type qu'un premier poste de travail (1),
chacun des véhicules (4) étant muni d'un ordinateur connecté à la commande prioritaire en vue de la transmission de données, au moyen d'un canal de communication,
chacun desdits véhicules (4) étant pourvu d'un système détecteur d'emplacements, affecté à la détection de l'emplacement du véhicule (4) considéré,
**caractérisé par le fait que**
la commande prioritaire transmet, aux ordinateurs des véhicules (4), l'emplacement qui est associé à un poste de travail (1, 2, 3) considéré et qui doit être abordé, par le véhicule (4), en vue de l'exécution d'une étape de procédé de fabrication à ce poste de travail (1, 2, 3) considéré,
ladite commande prioritaire transmettant, à l'ordinateur considéré des véhicules (4), un ordre respectif incluant la succession des postes de travail (1, 2, 3) devant être atteints, sachant que les ordinateurs desdits véhicules (4) transmettent leur emplacement de véhicule respectif à ladite commande prioritaire,
laquelle commande prioritaire transmet les emplacements de véhicules respectivement effectifs à tous les ordinateurs, avec récurrence temporelle, notamment sous la forme d'un télégramme de diffusion,
l'ordinateur respectif d'un véhicule (4) considéré déterminant alors un trajet de déplacement (5) le plus court possible, tributaire de l'emplacement des autres véhicules (4), sachant néanmoins que, lorsque ce trajet de déplacement est entravé par des véhicules (4) causant embouteillage, ou lorsqu'il convient de raccourcir le temps de production, le trajet de déplacement (5) est déterminé de façon telle que ledit trajet de déplacement (5) mène au second poste de travail (2) de même type se substituant à un premier poste de travail (1).

2. Procédé selon la revendication 1,
**caractérisé par le fait que**
le canal de communication est instauré par des sources lumineuses pilotables et par des capteurs photosensibles correspondants,
au moins une source lumineuse pilotable, et au moins un capteur photosensible, étant respectivement implantés sur le véhicule (4) considéré,
au moins une source lumineuse pilotable et un capteur photosensible étant implantés, à chaque fois, dans l'installation de production.

3. Procédé selon au moins l'une des revendications précédentes,
**caractérisé par le fait que**
chaque poste de travail (1, 2, 3) inclut un ordinateur et est raccordé à la commande prioritaire en vue de la transmission de données, au moyen d'un canal de communication, sachant que, par l'intermédiaire dudit canal de communication, le statut dudit poste de travail (1, 2, 3) est signalé à ladite commande prioritaire et, par cette dernière, aux véhicules (4), notamment au moyen d'un télégramme de diffusion.

4. Procédé selon au moins l'une des revendications précédentes,
**caractérisé par le fait que**
l'ordinateur respectif d'un véhicule (4) considéré détermine le trajet de déplacement (5) d'une manière tributaire du statut du poste de travail (1, 2, 3)
en reprogrammant notamment ledit trajet de déplacement (5), vers le second poste de travail (2) de même type, en cas de dysfonctionnement du premier poste de travail (1).

5. Installation de production, dévolue à la mise en œuvre d'un procédé conforme à au moins l'une des revendications précédentes.

6. Installation de production selon la revendication 5,
ladite installation de production étant équipée d'une commande prioritaire, de postes de travail (1, 2, 3) et de véhicules (4),
sachant qu'au moins deux postes de travail (1, 2, 3) présentent des réalisations de même type, d'où la présence d'un second poste de travail (2) de même type qu'un premier poste de travail (1),
chacun des véhicules (4) étant muni d'un ordinateur connecté à la commande prioritaire en vue de la transmission de données, au moyen d'un canal de communication,
chacun desdits véhicules (4) étant pourvu d'un système détecteur d'emplacements, affecté à la détection de l'emplacement du véhicule (4) considéré,
**caractérisée par le fait que**
chaque véhicule (4) est muni d'un ordinateur affecté à la détermination d'un trajet de déplacement (5) optimal.
